# EUROPÄISCHE PATENTSCHRIFT

(11) **EP 2 843 455 B1**
(45) Veröffentlichungstag und Bekanntmachung des Hinweises auf die Patenterteilung: **27.04.2016**
(21) Anmeldenummer: 14182309.6
(22) Anmeldetag: 26.08.2014
(51) Int. Cl.: G02B 7/02

(54) **Fassung für ein Optikelement und optisches System**
Mount for an optical element and optical system
Monture pour un élément optique et système optique

(30) Priorität: 27.08.2013 DE 102013109263
(43) Veröffentlichungstag der Anmeldung: 04.03.2015
(73) Patentinhaber: Jos. Schneider Optische Werke GmbH, 55543 Bad Kreuznach (DE)
(72) Erfinder: Tippner, Uwe, 55545 Bad Kreuznach (DE)
(74) Vertreter: Schneider, Peter Christian

(56) Entgegenhaltungen:
- EP-A1- 1 515 172
- DE-A1- 3 634 196
- DE-A1- 10 043 344
- JP-A- S6 286 315

## Beschreibung

### Gebiet der Erfindung

Die Erfindung bezieht sich auf eine Fassung für ein Optikelement mit kreisförmigem Außenumfang, umfassend einen radial federnden Ring in Form eines gleichmäßigen, abgerundeten Polygons mit einer Mehrzahl von Kanten und einer gleichen Mehrzahl abgerundeter Ecken, wobei ein die Kanteninnenseitenmitten des Polygonrings tangierender, erster einbeschriebener Kreis im kräftefreien Zustand einen kleineren Durchmesser als das Optikelement hat und der Polygonring durch nach radial außen gerichtete Kraftbeaufschlagung der Kantenmitten federnd in einen kraftbeaufschlagten Zustand überführbar ist, in dem der erste einbeschriebene Kreis einen größeren Durchmesser als das Optikelement hat.

Die Erfindung bezieht sich weiter auf ein optisches System, umfassend ein Optikelement und eine Fassung zum Einfassen des Optikelementes entlang seines Umfangs, die als ein radial federnder Ring in Form eines gleichmäßigen, abgerundeten Polygons mit einer Mehrzahl von Kanten und einer gleichen Mehrzahl abgerundeter Ecken ausgebildet ist, wobei ein die Kanteninnenseitenmitten des Polygonrings tangierender, erster einbeschriebener Kreis im kräftefreien Zustand einen kleineren Durchmesser als das Optikelement hat und der Polygonring durch nach radial außen gerichtete Kraftbeaufschlagung der Kantenmitten federnd in einen kraftbeaufschlagten Zustand überführbar ist, in dem der erste einbeschriebene Kreis einen größeren Durchmesser als das Optikelement hat.

### Stand der Technik

Derartige Fassungen und Fassungshalterungen sind bekannt aus der JP S62 86315 A.

Es ist allgemein bekannt, Optikelemente, beispielsweise Linsen oder Linsengruppen, in Fassungen, die das Optikelement entlang seines Außenumfangs umgreifen, einzufassen. Dies ist insbesondere notwendig, wenn das Optikelement in einem größeren optischen System, beispielsweise einem fotografischen Objektiv, einem Projektionsobjektiv, einem Mikroskop, einem Fernglas o.ä. eingebaut werden soll. Dabei ist es unerheblich, ob das Optikelement im Montageendzustand verschieblich sein soll oder nicht. Auch im Fall des im Montageendzustand nicht verschieblichen Optikelementes erleichtert eine Fassung die Montage und erhöht deren Präzision.

Typischerweise werden Optikelemente, insbesondere Linsen, in ihre Fassungen eingeklebt. Alternativ hierzu ist es bekannt, die Fassung als starren Ring mit nach innen gerichteten Federelementen auszubilden. Dies können beispielsweise in die Zentralöffnung des Fassungsrings ragende Blattfedern oder dauerelastische Kissen, beispielsweise Silikonkissen, sein. All diese Varianten erfordern zusätzliche Bauteile und Arbeitsschritte und sind daher unter Kostenaspekten ungünstig.

Aus der DE 103 42 269 A1 ist eine Fassung für eine kreisrunde Linse bekannt, bei der die Linse in einen Fassungsring eingelegt wird, sodass sie spielfrei, jedoch ohne Pressungen an der inneren Mantelfläche des Fassungsringes anliegt und axial von einer aus der inneren Mantelfläche vorstehenden Dreipunktauflage gestützt wird. Zur abschließenden axialen Fixierung der Linse wird auf der der Dreipunktauflage abgewandten Seite der Linse ein Federring an dieses angelegt und mit dem Fassungsring verschraubt. Der Federring weist einen außen kreisrunden Rahmen mit einer abgerundet polygonalen Öffnung auf, wobei durch Einschnitte parallel zu den Kanten des Polygons Federstege herausgearbeitet sind, deren Innenkanten an der axialen Oberfläche der Linse anliegen und eine Biege- sowie Torsionsfederwirkung zeigen.

Aus der JP 07 191 248 A ist eine Fassung für eine kreisrunde Linse bekannt, bei der die Linse ebenfalls in einen sie einseitig axial stützenden Fassungsring eingelegt wird. Dies erfolgt hier jedoch nicht spielfrei. Vielmehr ist zum Abpuffern thermischer Ausdehnungen ein elastischer Pufferring zwischen dem umlaufenden Rand der Linse und der inneren Mantelfläche des Fassungsrings vorgesehen.

Ein ähnliches Konzept wird in der DE 36 34 196 verfolgt. Hier werden zwischen dem Rand der Linse und der inneren Mantelfläche des Fassungsrings jedoch einzelne, elastische Stützärmchen eingesetzt.

Aus der DE 100 43 344 A1 ist eine Fassung bekannt, deren Form im Wesentlichen einer Kreisringscheibe entspricht, deren lichte Weite an drei jeweils um 120° zueinander versetzt angeordneten Positionen kreissegmentförmig verengt ist. Jede Verengung weist einen parallel zur Segmentkante orientierten Schlitz auf, der eine Klemmung eines Optikelementes zwischen den Kanten der drei Verengungen erlaubt.

Einen ähnlichen Ansatz verfolgt die EP 1 515 172 A1, bei der die Verengungen jedoch so breit gestaltet sind, dass sie einander seitlich überlappen. Zudem sind die Segmentkanten zur besseren Anpassung an den kreisförmigen Rand des Optikelementes geschwungen ausgebildet.

Die oben genannte, gattungsbildende JP S62 86315 A offenbart einen Wellenfederring, der als Fassung für ein Linse dient und selbst in einer Fassungshalterung gehaltert ist. Durch diese spezielle Ausgestaltung der Fassung als Wellenfederring - oder, allgemeiner formuliert, als federnder Polygonring - kann sowohl bei der Halterung des Optikelementes in der Fassung als auch bei der Verankerung der Fassung in einer Fassungshalterung auf zusätzliche Federelemente verzichtet werden. Die bekannte Fassung ist zudem geeignet zur Halterung in einer Fassungshalterung, die als eine starre Scheibe mit einer runden Zentralausnehmung ausgebildet ist, wobei ein die nach außen gerichteten Wellenberge des Wellenfederrings, d.h. die abgerundeten Ecken des Polygonrings, tangierender, zweiter einbeschriebener Kreis im kräftefreien Zustand einen kleineren Durchmesser als eine lichte Weite der Zentralausnehmung hat und der Wellenfederring durch nach radial innen gerichtete Kraftbeaufschlagung der Ecken federnd in einen kraftbeaufschlagten Zustand überführbar ist, in dem der zweite einbeschriebene Kreis einen kleineren Durchmesser als die lichte Weite der Zentralausnehmung hat.

Allerdings ist der bekannte Wellenfederring nicht mehr ist als ein gewellter und bedarfsgerecht abgelängter Blechstreifen, dessen Enden miteinander verbunden wurden, und stellt eine recht unpräzise Fassung dar, die für hochwertige Optiken nicht zu gebrauchen ist. Bei hochwertigen Optiken wird man unter Wahrung des grundsätzlichen Funktionsprinzips auf präzise gefräse Teile mit einer geringeren Anzahl von Ecken bzw. Kanten zurückgreifen. Derartige Präzisions-Polygonringe sind jedoch in der Regel recht steif, d.h. die zu ihrer elastischen Verformung erforderlichen Kräfte sind recht hoch. Zudem besteht eine starke Kopplung zwischen den im Bereich der Kantenmitten nach innen wirkenden Federkräften und den im Bereich der Ecken wirkenden nach außen gerichteten Federkräften. Dies kann insbesondere bei schmalen Optikelementen zu einer erschwerten Montage, insbesondere zu einem verkippten Einbau führen.

### Aufgabenstellung

Es ist die Aufgabe der vorliegenden Erfindung, eine verbesserte Fassung für Optikelemente zur Verfügung zu stellen, die ohne Präzisionseinbußen eine leichtere und präzisere Montage zulässt.

### Darlegung der Erfindung

Diese Aufgabe wird in Verbindung mit den Merkmalen des Oberbegriffs von Anspruch 1 dadurch gelöst, dass der Polygonring im Bereich seiner abgerundeten Ecken jeweils eine sich zwischen den Fußpunkten der Eckabrundung erstreckende, axial begrenzte Ausnehmung aufweist.

Hieraus ergibt sich die Möglichkeit zur Schaffung eines optischen Systems mit den Merkmalen des Oberbegriffs von Anspruch 4, welches sich dadurch auszeichnet, dass der Polygonring im Bereich seiner abgerundeten Ecken jeweils eine sich zwischen den Fußpunkten der Eckabrundung erstreckende, axial begrenzte Ausnehmung aufweist.

Bevorzugte Ausführungsformen der Erfindung sind Gegenstand der abhängigen Ansprüche.

Die aus dem Stand der Technik bekannte Grundlage der Erfindung ist die Kopplung des Optikelementes mit seiner Fassung über Federkräfte. Hierfür werden keine zusätzlichen Federelemente benötigt; vielmehr ist der Fassungsring in spezieller Weise derart ausgebildet, dass seine Ringwand bereichsweise selbst als Feder wirkt. Hierzu ist der Fassungsring polygonal ausgebildet. Im Bereich seiner Ecken weist ein solches Polygon eine geringere Elastizität auf als im Bereich seiner Kanten. Die Kanten können zwischen den relativ steifen Eckpunkten daher blattfederartig wirken. Im kräftefreien Zustand ist das Polygon weitestgehend spannungsfrei. Zur Erzielung der notwendigen Vorspannung ist es daher notwendig, die als Blattfedern wirkenden Kanten vorzuspannen. Dies kann durch das Einsetzen des Optikelementes selbst erfolgen, welches in seiner Größe auf die Fassungsgröße abgestimmt sein muss. Unabhängig von dem Optikelement lässt sich für den Fassungsring ein erster einbeschriebener Kreis definieren, der durch die Mittelpunkte der Innenseiten der Polygonkanten als Tangentenpunkte eindeutig beschrieben wird. Dieser erste einbeschriebene Kreis hat im kräftefreien Zustand des Fassungsrings einen kleineren Durchmesser zu haben als das Optikelement, das hier der Einfachhalt halber zunächst als mit kreisförmigem Außenumfang versehen angenommen wird. Eine weitere, zwingende Voraussetzung ist, dass der Federring durch Kraftbeaufschlagung an den genannten Tangentenpunkten des ersten einbeschriebenen Kreises innerhalb seiner Federkapazität, d.h. ohne plastische Verformung, derart verformbar ist, dass der Durchmesser des ersten einbeschriebenen Kreises größer wird, als der Durchmesser des Optikelementes. Vorzugsweise liegen die Dimensionsunterschiede zwischen dem Durchmesser des einbeschriebenen Kreises im kräftefreien Zustand, des Optikelementes und des einbeschriebenen Kreises im kraftbeaufschlagten Zustand im Submillimeterbereich. Diese Größenordnung der Präzisionsfertigung ist im modernen Optikbau völlig unproblematisch. Das Optikelement kann dann selbst als Spreizelement zum Aufspreizen des Polygonrings verwendet werden. Nach dem Einsetzen wird es durch die federnden Rückstellkräfte zentriert in Position gehalten. Die Aufspreizung bei der Montage kann ggf. durch nach innen gerichteten Druck auf die Polygonecken unterstützt werden.

Das Resultat einer Einfassung eines Optikelementes mit einer solchen Fassung ist eine einfach zu montierende, perfekt zentrierte und ohne zusätzlich Bauteile auskommende Montage. Dabei kann das Optikelement auch eine von dem kreisförmigen Außenumfang abweichende Formgebung aufweisen; günstige und ungünstige Formen wird der Fachmann vor dem Hintergrund der hier offenbarten technischen Lehre anhand einfacher geometrischer Überlegungen leicht auffinden können.

Typischerweise sind zur Halterung gefasster Optikelemente in komplexeren optischen Systemen Fassungshalterungen vorgesehen, die in definierter Relativposition zu einer Stützwandung oder einem Gerüst des optischen Systems positioniert sind und die Fassung, die ihrerseits das Optikelement einfasst, aufnehmen. Oft haben derartige Fassungshalterungen eine Zentralausnehmung, deren Innenprofil exakt an das Außenprofil der Fassung angepasst ist, sodass diese formschlüssig aufgenommen werden und beispielsweise mittels einer Madenschraube fixiert werden kann. Ebenso wie der aus dem Stand der Technik bekannte Wellenfederring ist auch die erfindungsgemäße Fassung zur Halterung in einer Fassungshalterung geeignet, die als eine starre Scheibe mit einer runden Zentralausnehmung ausgebildet ist, wobei ein die Eckenaußenseiten des Polygonrings tangierender, zweiter einbeschriebener Kreis im kräftefreien Zustand einen kleineren Durchmesser als eine lichte Weite der Zentralausnehmung hat und der Polygonring durch nach radial innen gerichtete Kraftbeaufschlagung der Ecken federnd in einen kraftbeaufschlagten Zustand überführbar ist, in dem der zweite einbeschriebene Kreis einen kleineren Durchmesser als die lichte Weite der Zentralausnehmung hat. Ein entsprechendes optisches System zeichnet sich dadurch aus, dass eine Fassungshalterung umfasst ist, die als eine starre Scheibe mit einer Zentralausnehmung ausgebildet ist, wobei ein die Eckenaußenseiten des Polygonrings tangierender, zweiter einbeschriebener Kreis im kräftefreien Zustand einen kleineren Durchmesser als eine lichte Weite der Zentralausnehmung hat und der Polygonring durch nach radial innen gerichtete Kraftbeaufschlagung der Ecken federnd in einen kraftbeaufschlagten Zustand überführbar ist, in dem der zweite einbeschriebene Kreis einen kleineren Durchmesser als die lichte Weite der Zentralausnehmung hat.

Zur Fixierung der Fassung in der Fassungshalterung ist ein Kraftschluss zwischen Fassung und Fassungshalterung vorgesehen. Hierzu werden erneut die federnden Eigenschaften des erfindungsgemäßen Polygonrings genutzt. Wie erläutert, wirken dessen Kanten als Blattfedern. Aufgrund der polygonen Geometrie entwickeln diese jedoch nicht nur eine nach radial innen gerichtete Kraft, mit welcher das Optikelement gehalten wird. Vielmehr ergibt sich auch eine Elastizität der Relativpositionen der Ecken, insbesondere einander gegenüberliegender Ecken zueinander. Unabhängig von der Form der Fassungshalterung lässt sich ein zweiter einbeschriebener Kreis definieren, der durch die Außenseiten der Ecken als Tagentenpunkte beschrieben wird. Dieser hat in einem kräftefreien Zustand einen Durchmesser, der größer ist als eine hier zunächst der Einfachhalt halber als rund angenommene Zentralausnehmung der Fassungshalterung. Durch nach innen gerichtete Kraftbeaufschlagung von deren Ecken lässt sich der zweite einbeschriebene Kreis unter elastischer Verformung der Polygonkanten so weit verkleinern, dass sein Durchmesser kleiner ist als der Durchmesser der Zentralausnehmung. In diesem Zustand existieren nach außen gerichtete Federkräfte, die die Ecken in ihre Ursprungsposition zurückzuüberführen versuchen. Einsetzen der solchermaßen kraftbeaufschlagten Fassung in die Fassungshalterung und anschließendes Lösen der Kraftbeaufschlagung führt zu einer exakt zentrierten, kraftschlüssigen Halterung der Fassung in der Fassungshalterung. Die Durchmesserdifferenzen zwischen dem zweiten einbeschriebenen Kreis im kräftefreien Zustand, im kraftbeaufschlagten Zustand und der Zentralausnehmung liegen bevorzugt im Submillimeterbereich. Der Fachmann wird erkennen, dass eine kreisrunde Formgebung der Zentralausnehmung nicht zwingend erforderlich ist. Abweichungen hiervon kann der Fachmann vor dem Hintergrund der hier offenbarten technischen Lehre aufgrund einfacher geometrischer Überlegungen leicht auffinden.

Erfindungsgemäß ist nun vorgesehen, dass der federnde Polygonring im Bereich seiner abgerundeten Ecken eine sich zwischen den Fußpunkten der Eckabrundung erstreckende, axial begrenzte Ausnehmung aufweist. Dies ist insbesondere günstig, wenn das Optikelement, wie etwa eine Linse, einen vergleichsweise schmalen Außenrand hat, der schmaler als die axiale Breite der besagten Ausnehmung ist. Durch die Ausnehmungen im Eckbereich verschmälert sich die Anlagefläche der Fassung an der Fassungshalterung. Hierdurch werden die zur Vorspannung erforderlichen, nach innen gerichteten Radialkräfte reduziert. Zudem erfolgt eine teilweise Entkopplung der im Bereich der Kantenmitten nach innen wirkenden Federkräfte von den im Bereich der Ecken wirkenden nach außen gerichteten Federkräften. Hierdurch verringert sich das Risiko, durch zu starke Kraftaufwendung in den Ecken zwecks Halterung der Fassung in der Fassungshalterung die Polygonkanten so weit zu verformen, dass die kraftschlüssige Fassung des Optikelementes gefährdet ist. In dem besonders bevorzugten Fall eines Optikelementes mit schmalem Außenrand, wird dieses bevorzugt axial so gefasst, dass sein Rand und die Eckausnehmungen in einer gemeinsamen Ebene liegen.

Bei einer günstigen Weiterbildung der Erfindung weist der federnde Polygonring der Fassung einen nach radial innen gerichtetem Steg zur axialen Anlage des Optikelementes auf. Vergleichbares kann auch für die Fassungshalterung vorgesehen sein, nämlich dass die Fassungshalterung einen nach radial innen gerichteten Steg zur axialen Anlage des Optikelementes oder der Fassung aufweist. Im erstgenannten Fall ist jedoch darauf zu achten, dass der Steg keine so große Versteifung des Polygonrings erzeugt, dass dessen Elastizität zu stark eingeschränkt wird, um die erfindungsgemäße Funktion auszuüben.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine schematische Darstellung des Grundaufbaus der erfindungsgemäßen Fassung in einer ersten Ausführungsform
- Figur 2:: eine schematische Darstellung des Grundaufbaus der erfindungsgemäßen Fassung in einer zweiten Ausführungsform
- Figur 3:: eine perspektivische Darstellung einer erfindungsgemäßen Fassung
- Figur 4:: eine Draufsicht auf die Fassung von Figur 3
- Figur 5:: eine perspektivische Darstellung einer alternativen Ausführungsform einer erfindungsgemäßen Fassung
- Figur 6:: eine Querschnittsdarstellung der Fassung von Figur 5.

### Ausführliche Beschreibung bevorzugter Ausführungsformen

Gleiche Bezugszeichen in den Figuren deuten auf gleiche oder analoge Bauteile hin.

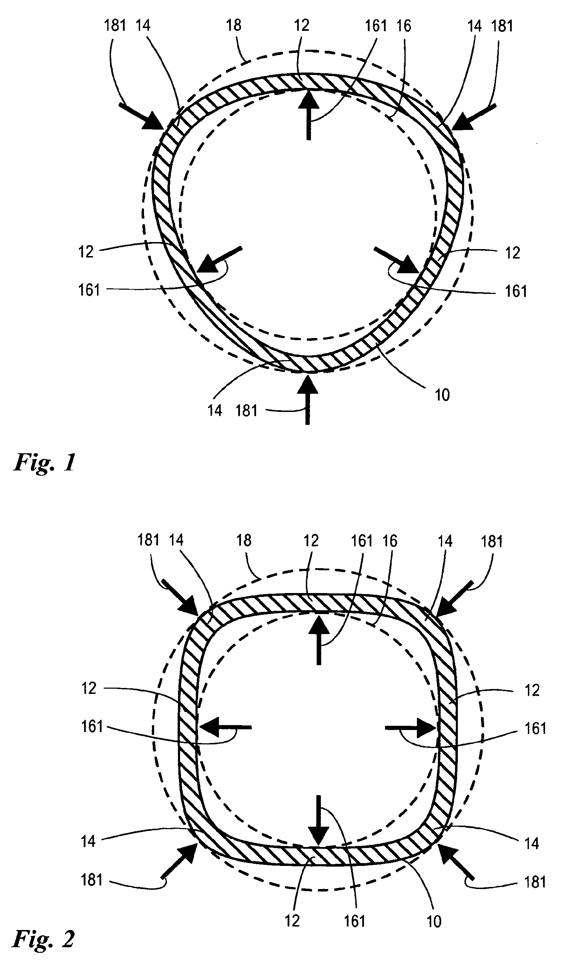

Die Figuren 1 und 2 zeigen in stark schematisierter Darstellung den prinzipiellen Grundaufbau einer erfindungsgemäßen Fassung. Als zentrales Element weist diese einen Polygonring 10 auf, der sich aus einer Mehrzahl Kanten 12 und einer gleichen Mehrzahl abgerundeter Ecken 14 aufbaut. Bei der Ausführungsform von Figur 1 sind drei Kanten 12 und drei abgerundete Ecken 14 vorgesehen. Bei der Ausführungsform von Figur 2 sind vier Kanten 12 und vier abgerundete Ecken 14 vorgesehen.

In den Figuren 1 und 2 ist der Polygonring 10 jeweils in kräftefreiem Zustand dargestellt. Es lässt sich ein erster einbeschriebener Kreis 16 definieren, der die Mittelpunkte der Innenseiten der Kanten 12 tangiert. In ähnlicher Weise lässt sich ein zweiter einbeschriebener Kreis 18 definieren, der die Außenseiten der Ecken 14 tangiert. Während die Ecken 14 vergleichsweise steife Strukturen bilden, wirken die Kanten 12 als Blattfedern. Eine nach radial außen wirkende, an den Tangentenpunkten des ersten einbeschriebenen Kreises 16 ansetzende Kraft, die in den Figuren 1 und 2 durch die ersten Kraftpfeile 161 symbolisiert ist, führt somit zu einer Verformung des Polygonrings, die eine geringfügige Vergrößerung des ersten einbeschriebenen Kreises 16 zur Folge hat. Der Polygonring 16 weist eine Material- und/oder Formelastizität auf, so dass durch die nach radial außen gerichtete Kraft eine nach radial innen gerichtete Federrückstellkraft provoziert wird. Setzt man nun ein optisches Element mit dem Durchmesser des durch die Krafteinwirkung vergrößerten, ersten einbeschriebenen Kreises in den Polygonring 10 ein und beendet die Kraftbeaufschlagung, wird das optische Element aufgrund der Federrückstellkräfte kraftschlüssig und zentriert im Zentrum des Polygonrings 10 gehalten. Zur Erzeugung einer größeren Kontaktfläche zwischen dem Außenrand des optischen Elementes und den Innenseiten der Kanten 12, kann wie bei den nachfolgend beschriebenen Ausführungsformen eine entsprechende Formanpassung der Kanteninnenseiten des Polygonrings 10 vorgesehen sein.

Eine weitere Verformung des Polygonrings 10 lässt sich erreichen durch Anwendung einer nach radial innen gerichteten Kraft, die an den Tangentenpunkten des zweiten einbeschriebenen Kreises 18, d.h. in den Scheitelpunkten der abgerundeten Kanten 14 ansetzt. Eine solche Kraft ist in den Figuren 1 und 2 durch die zweiten Kraftpfeile 181 symbolisiert. Eine derart erzeugte Verformung führt zu einer geringfügigen Verkleinerung des zweiten einbeschriebenen Kreises 18. Auch in diesem kraftbeaufschlagten Zustand werden der nach radial innen wirkenden Kraft entgegen wirkende, nach radial außen gerichtete Federrückstellkräfte erzeugt. Setzt man nun den derart verformten Polygonring in eine Ausnehmung einer nicht dargestellten Fassungshalterung von dem Durchmesser des verkleinerten zweiten einbeschriebenen Kreises 18, wird die Fassung kraftschlüssig und zentriert in der Ausnehmung der Fassungshalterung gehaltert. Zur Vergrößerung der Kontaktfläche zwischen den Kanten 14 des Polygonrings 10 und der Innenfläche der Fassungshalterung können, wie bei nachfolgend beschriebenen Ausführungsformen, Formanpassungen der Ecken 14 vorgesehen sein.

Der Fachmann wird erkennen, dass die beiden vorgenannten Verformungen der Fassung nicht vollständig unabhängig sind, dass aber bei geeigneter Relativdimensionierung von Polygonring 10, Optikelement und Fassungshalterung leicht eine Konstellation gefunden werden kann, die für eine kraftschlüssige und zentrierte Halterung des Optikelementes in der Fassung und eine kraftschlüssige und zentrierte Halterung der Fassung in der Fassungshalterung gewährleistet. Beide Fixierungen sind unempfindlich gegenüber Temperaturschwankungen.

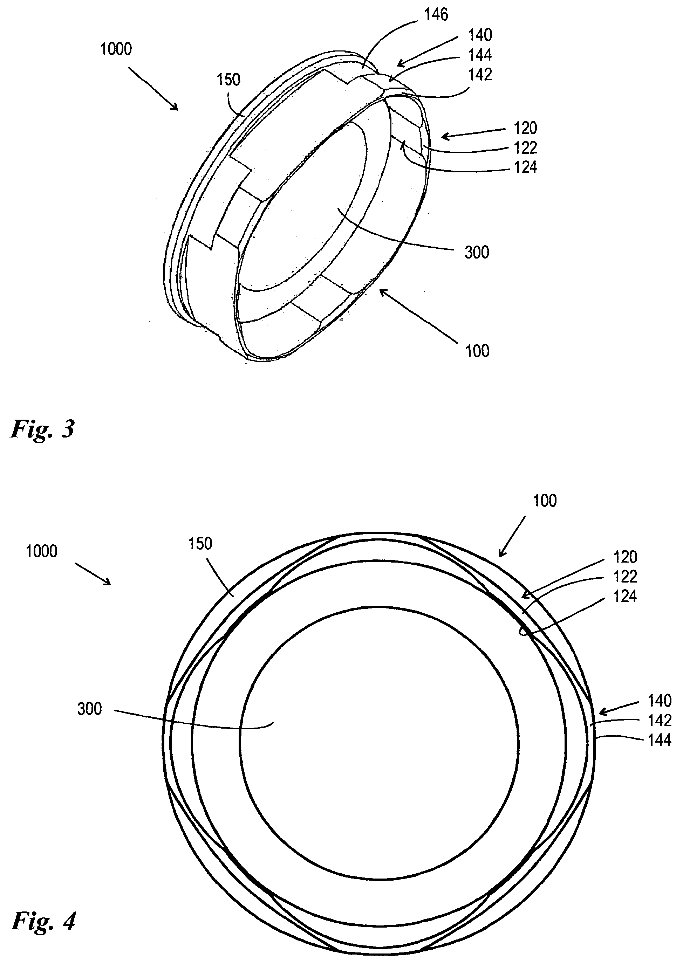

Die Figuren 3 und 4 zeigen eine erste Ausführungsform einer ersten erfindungsgemäßen Fassung 1000 in perspektivischer Ansicht (Figur 3) und in Draufsicht (Figur 4). Der Polygonring 100 der Fassung 1000 weist vier Kanten 120 und vier Ecken 140 auf, von denen der Übersichtlichkeit halber in den Figuren jedoch nur jeweils eine mit Bezugszeichen versehen ist. Die Fassung 1000 dient der Halterung eines Optikelementes 300, welches im vorliegenden Fall als dickrandige Meniskuslinse ausgebildet ist. Man erkennt, dass die Kanten 120 im Bereich ihrer Mitten eine Verdickung 122 aufweisen, deren Innenseite 124 mit einem Radius versehen ist, um eine Formanpassung an den Rand des Optikelementes 300 und damit einer Vergrößerung der Kontaktfläche und eine Verbesserung dessen Klemmung zu erzielen. In ähnlicher Weise sind die Ecken 140 mit nach außen gerichteten Verdickungen 142 versehen, deren Außenflächen 144 einen Radius zur Formanpassung und Kontaktflächenvergrößerung mit einer nicht dargestellten Fassungshalterung aufweisen. Die Ecken 140 sind axial zweigeteilt ausgebildet.

Während sich die vorbeschriebene Verdickung 122 in einem Axialbereich befindet, in dem der Rand des Optikelementes 300 im eingesetzten Zustand nicht positioniert ist, befindet sich in demjenigen Axialbereich, in dem der Rand des Optikelementes 300 im eingesetzten Zustand positioniert ist, eine Ausnehmung 146. Diese Maßnahme dient der besseren Entkopplung der federnden Verformungen des Polygonrings 100 im Bereich seiner Kanten 120 einerseits und seiner Ecken 140 andererseits.

Schließlich weist die Fassung 1000 noch einen Anschlagring 150 auf, der der axialen Anlage des Optikelementes 300 dient.

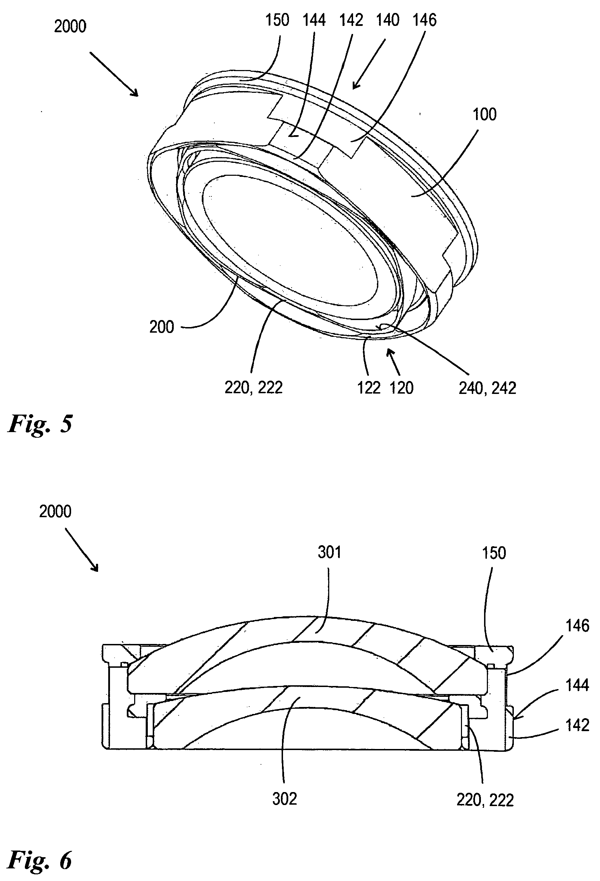

Die Figuren 5 und 6 zeigen eine weitere Ausführungsform einer erfindungsgemäßen Fassung, die als Doppelfassung 2000 ausgebildet ist. Im Hinblick auf eine radial äußere Teilfassung der Doppelfassung 2000 kann auf die Erläuterungen zu den Figuren 3 und 4 verwiesen werden mit dem Unterschied, dass hier zusätzlich zu einem Optikelement 301 eine innere Teilfassung gehaltert wird, die ein zweites Optikelement 302 fasst. Die zweite Teilfassung weist denselben prinzipiellen Aufbau wie die erste Teilfassung auf, was durch Wahl ähnlicher Bezugszeichen zum Ausdruck gebracht wird: wo für die erste Teilfassung Bezugszeichen der Struktur "1XX" gewählt wurden, wurden für analoge Elemente der zweiten Teilfassung Bezugszeichen der Struktur "2XX" gewählt. Insoweit kann bezüglich der Funktionsweise auf die obige Erläuterung verwiesen werden.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

### Bezugszeichenliste

- 10: Polygonring
- 12: Kante von 10
- 14: Ecke von 10
- 16: erster einbeschriebener Kreis
- 161: erster Kraftpfeil
- 18: zweiter einbeschriebener Kreis
- 181: zweiter Kraftpfeil
- 1000: Fassung
- 100: Polygonring von 1000 / erster Polygonring von 2000
- 120: Kante von 100
- 122: Verdickung von 120
- 124: Innenfläche von 122
- 140: Ecke von 100
- 142: Verdickung von 140
- 144: Außenfläche von 142
- 146: Ausnehmung von 140
- 150: Anschlagring
- 2000: Fassung
- 200: zweiter Polygonring von 2000
- 220: Kante von 200
- 222: Verdickung von 220
- 240: Ecke von 200
- 242: Verdickung von 240
- 300: Optikelement
- 301: erstes Optikelement
- 302: zweites Optikelement

## Patentansprüche

1. Fassung für ein Optikelement (300, 301, 302) mit kreisförmigem Außenumfang, umfassend einen radial federnden Ring (10, 100, 200) in Form eines gleichmäßigen, abgerundeten Polygons mit einer Mehrzahl von Kanten (12, 120, 220) und einer gleichen Mehrzahl abgerundeter Ecken (154, 140, 240),
wobei ein die Kanteninnenseitenmitten des Polygonrings (10, 100, 200) tangierender, erster einbeschriebener Kreis (16) im kräftefreien Zustand einen kleineren Durchmesser als das Optikelement (300, 301, 302) hat und
der Polygonring (10, 100, 200) durch nach radial außen gerichtete Kraftbeaufschlagung der Kantenmitten federnd in einen kraftbeaufschlagten Zustand überführbar ist, in dem der erste einbeschriebene Kreis (16) einen größeren Durchmesser als das Optikelement (300, 301, 302) hat,
**dadurch gekennzeichnet,**
**dass** der Polygonring (10, 100, 200) im Bereich seiner abgerundeten Ecken (14, 140, 240) jeweils eine sich zwischen den Fußpunkten der Eckabrundung erstreckende, axial begrenzte Ausnehmung (146) aufweist.

2. Fassung nach Anspruch 1,
**dadurch gekennzeichnet,**
**dass** die Fassung geeignet ist zur Halterung in einer Fassungshalterung, die als eine starre Scheibe mit einer runden Zentralausnehmung ausgebildet ist, wobei ein die Eckenaußenseiten des Polygonrings (10, 100, 200) tangierender, zweiter einbeschriebener Kreis (18) im kräftefreien Zustand einen größeren Durchmesser als eine lichte Weite der Zentralausnehmung hat und der Polygonring (10, 100, 200) durch nach radial innen gerichtete Kraftbeaufschlagung der Ecken (14, 140, 240) federnd in einen kraftbeaufschlagten Zustand überführbar ist, in dem der zweite einbeschriebene Kreis (18) einen kleineren Durchmesser als die lichte Weite der Zentralausnehmung hat.

3. Fassung nach einem der Ansprüche 1 und 2,
**dadurch gekennzeichnet,**
**dass** der Polygonring einen nach radial innen gerichteten Steg (150) zur axialen Anlage des Optikelementes (300, 301, 302) aufweist.

4. Optisches System, umfassend ein Optikelement (300, 301, 302) und eine Fassung (1000, 2000) zum Einfassen des Optikelementes (300, 301, 302) entlang seines Umfangs, die als ein radial federnder Ring (10, 100, 200) in Form eines gleichmäßigen, abgerundeten Polygons mit einer Mehrzahl von Kanten (12, 120, 220) und einer gleichen Mehrzahl abgerundeter Ecken (14, 140, 240) ausgebildet ist, wobei ein die Kanteninnenseitenmitten des Polygonrings (10, 100, 200) tangierender, erster einbeschriebener Kreis (16) im kräftefreien Zustand einen kleineren Durchmesser als das Optikelement (300, 301, 302) hat und der Polygonring (10, 100, 200) durch nach radial außen gerichtete Kraftbeaufschlagung der Kantenmitten federnd in einen kraftbeaufschlagten Zustand überführbar ist, in dem der erste einbeschriebene Kreis (18) einen größeren Durchmesser als das Optikelement (300, 301, 302) hat,
**dadurch gekennzeichnet,**
**dass** der Polygonring (10, 100, 200) im Bereich seiner abgerundeten Ecken (14, 140, 240) jeweils eine sich zwischen den Fußpunkten der Eckabrundung erstreckende, axial begrenzte Ausnehmung (146) aufweist.

5. Optisches System nach Anspruch 4,
**dadurch gekennzeichnet,**
**dass** weiter eine Fassungshalterung umfasst ist, die als eine starre Scheibe mit einer Zentralausnehmung ausgebildet ist, wobei ein die Eckenaußenseiten des Polygonrings (10, 100, 200) tangierender, zweiter einbeschriebener Kreis (18) im kräftefreien Zustand einen größeren Durchmesser als eine lichte Weite der Zentralausnehmung hat und der Polygonring durch nach radial innen gerichtete Kraftbeaufschlagung der Ecken (14, 140, 240) federnd in einen kraftbeaufschlagten Zustand überführbar ist, in dem der zweite einbeschriebene Kreis (18) einen kleineren Durchmesser als die lichte Weite der Zentralausnehmung hat.

6. Optisches System nach einem der Ansprüche 4 bis 5,
**dadurch gekennzeichnet,**
**dass** die Fassung (1000, 2000) einen nach radial innen gerichteten Steg (150) zur axialen Anlage des Optikelementes (300,. 301, 302) aufweist.

7. Optisches System nach Anspruch 5 oder nach Anspruch 6, soweit rückbezogen auf Anspruch 5,
**dadurch gekennzeichnet,**
**dass** die Fassungshalterung einen nach radial innen gerichteten Steg zur axialen Anlage des Optikelementes (300, 301, 302) oder der Fassung (1000, 2000) aufweist.

## Claims

1. Mount for an optical element (300, 301, 302) with a circular outer circumference, comprising a radially resilient ring (10, 100, 200) in the form of a uniform, rounded polygon with a plurality of edges (12,120, 220) and an identical number of rounded vertices (154,140, 240),
wherein, in the force-free state, a first inscribed circle (16), tangent to the centers of the inner sides of the edges of the polygonal ring (10, 100, 200), has a smaller diameter than the optical element (300, 301, 302), and the polygonal ring (10, 100, 200) can be resiliently transferred into a force-loaded state by means of applying to the centers of the edges a radially outward-directed force, in which state the first inscribed circle (16) has a larger diameter than the optical element (300, 301, 302),
**characterized in that,**
in the area of each of its rounded vertices (14,140, 240), the polygonal ring (10, 100, 200) has an axially limited recess (146) extending between the bottom points of the rounded vertex.

2. Mount according to Claim 1
**characterized in that**
the mount is suitable to be retained in a mount holder, which is designed as a rigid disc with a round central opening, wherein, in the force-free state, a second inscribed circle (18) tangent to the outsides of the vertices of the polygonal ring (10, 100, 200) has a larger diameter than the inside width of the central opening and the polygonal ring (10, 100, 200) can be resiliently transferred into a force-loaded state by means of applying a radially inward-directed force to the vertices (14, 140, 240), in which state the second inscribed circle (18) has a smaller diameter than the inside width of the central opening.

3. Mount according to one of Claims 1 and 2,
**characterized in that**
the polygonal ring has a radially inward-projecting rim (150) for axial abutment with the optical element (300, 301,302).

4. Optical system, comprising an optical element (300, 301, 302) and a mount (1000, 2000) for securing the optical element (300, 301, 302) around its circumference, said mount being designed as a radially resilient ring (10, 100, 200) in the form of a uniform, rounded polygon with a plurality of edges (12, 120, 220) and an identical number of rounded vertices (14, 140, 240), wherein, in the force-free state, a first inscribed circle (16) tangent to the centers of the inner sides of the edges of the polygonal ring (10, 100, 200) has a smaller diameter than the optical element (300, 301, 302) and the polygonal ring (10, 100, 200) can be resiliently transferred into a force-loaded state by applying a radially outward-directed force to the centers of the edges, in which state the first inscribed circle (18) has a larger diameter than the optical element (300, 301, 302),
**characterized in that**,
in the area of each of its rounded vertices (14,140, 240), the polygonal ring (10, 100, 200) has an axially limited recess (146) extending between the bottom points of the rounded vertex.

5. Optical system according to Claim 4,
**characterized in that**
it additionally comprises a mount holder, which is designed as a rigid disc with a central opening, wherein, in the force-free state, a second inscribed circle (18) tangent to the outsides of the vertices of the polygonal ring (10, 100, 200) has a larger diameter than the inside width of the central opening and the polygonal ring can be resiliently transferred into a force-loaded state by means of applying a radially inward-directed force to the vertices (14, 140, 240), in which state the second inscribed circle (18) has a smaller diameter than the inside width of the central opening.

6. Optical system according to one of Claims 4 to 5
**characterized in that**
the mount (1000, 2000) has a radially inward-projecting rim (150) for axial abutment with the optical element (300, 301, 302).

7. Optical system according to Claim 5 or Claim 6, when appendant to Claim 5,
**characterized in that**
the mount holder has a radially inward-projecting rim for axial abutment with the optical element (300, 301, 302) or the mount (1000, 2000).

## Revendications

1. Monture pour un élément optique (300, 301, 302) ayant une circonférence extérieure circulaire,
comprenant une bague (10, 100, 200) à élasticité radiale sous la forme d'un polygone régulier arrondi ayant un pluralité de côtés (12, 120, 220) et le même nombre de coins arrondis (14, 140, 240),
sachant qu'un premier cercle inscrit (16), tangent aux milieux des faces intérieures des côtés de la bague polygonale (10, 100, 200), possède dans l'état non soumis à des forces un plus petit diamètre que l'élément optique (300, 301, 302), et que la bague polygonale (10, 100, 200) peut, sous une sollicitation des milieux des côtés par une force dirigée radialement vers l'extérieur, être transférée élastiquement dans un état soumis à une force dans lequel le premier cercle inscrit (16) possède un plus grand diamètre que l'élément optique (300, 301, 302),
**caractérisée en ce que**
la bague polygonale (10, 100, 200) présente, dans la région de chacun de ses coins arrondis (14, 140, 240), un évidement (146) axialement limité, s'étendant entre les points de base de l'arrondi du coin.

2. Monture selon la revendication 1,
**caractérisée en ce que**
la monture est conçue pour être maintenue dans un support de monture qui est réalisé sous la forme d'un disque rigide doté d'un évidement central rond, sachant qu'un deuxième cercle inscrit (18), tangent aux faces extérieures des coins de la bague polygonale (10, 100, 200), possède dans l'état non soumis à des forces un plus grand diamètre qu'un diamètre de passage de l'évidement central, et que la bague polygonale (10, 100, 200) peut, sous une sollicitation des coins (14, 140, 240) par une force dirigée radialement vers l'intérieur, être transférée élastiquement dans un état soumis à une force dans lequel le deuxième cercle inscrit (18) possède un plus petit diamètre que le diamètre de passage de l'évidement central.

3. Monture selon l'une des revendications 1 et 2,
**caractérisée en ce que**
la bague polygonale présente une bordure (150) dirigée radialement vers l'intérieur pour l'appui axial de l'élément optique (300, 301, 302).

4. Système optique, comprenant un élément optique (300, 301, 302) et une monture (1000, 2000) pour encadrer l'élément optique (300, 301, 302) le long de sa circonférence, monture qui est conçue comme une bague (10, 100, 200) à élasticité radiale sous la forme d'un polygone régulier arrondi ayant un certain nombre de côtés (12, 120, 220) et le même nombre de coins arrondis (14, 140, 240), sachant qu'un premier cercle inscrit (16), tangent aux milieux des faces intérieures des côtés de la bague polygonale (10, 100, 200), possède dans l'état non soumis à des forces un plus petit diamètre que l'élément optique (300, 301, 302), et que la bague polygonale (10, 100, 200) peut, sous une sollicitation des milieux des côtés par une force dirigée radialement vers l'extérieur, être transférée élastiquement dans un état soumis à une force dans lequel le premier cercle inscrit (18) possède un plus grand diamètre que l'élément optique (300, 301, 302),
**caractérisé en ce que**
la bague polygonale (10, 100, 200) présente, dans la région de chacun de ses coins arrondis (14, 140, 240), un évidement (146) axialement limité, s'étendant entre les points de base de l'arrondi du coin.

5. Système optique selon la revendication 4,
**caractérisé en ce**
**qu'**il comprend en outre un support de monture qui est réalisé sous la forme d'un disque rigide doté d'un évidement central rond, sachant qu'un deuxième cercle inscrit (18), tangent aux faces extérieures des coins de la bague polygonale (10, 100, 200), possède dans l'état non soumis à des forces un plus grand diamètre qu'un diamètre de passage de l'évidement central, et que la bague polygonale peut, sous une sollicitation des coins (14, 140, 240) par une force dirigée radialement vers l'intérieur, être transférée élastiquement dans un état soumis à une force dans lequel le deuxième cercle inscrit (18) possède un plus petit diamètre que le diamètre de passage de l'évidement central.

6. Système optique selon l'une des revendications 4 à 5,
**caractérisé en ce que**
la monture (1000, 2000) présente une bordure (150) dirigée radialement vers l'intérieur pour l'appui axial de l'élément optique (300, 301, 302).

7. Système optique selon la revendication 5 ou selon la revendication 6, dans la mesure où elle est rattachée à la revendication 5,
**caractérisé en ce que**
le support de monture présente une bordure dirigée radialement vers l'intérieur pour l'appui axial de l'élément optique (300, 301, 302) ou de la monture (1000, 2000).
